# EUROPÄISCHE PATENTSCHRIFT

(11) **EP 4 181 661 B1**
(45) Veröffentlichungstag und Bekanntmachung des Hinweises auf die Patenterteilung: **21.05.2025**
(21) Anmeldenummer: 21739997.1
(22) Anmeldetag: 01.07.2021
(51) Int. Cl.: A01G 23/00

(54) **MOBILE ARBEITSMASCHINE, INSBESONDERE FORSTMASCHINE**
MOBILE WORK MACHINE, IN PARTICULAR A FORESTRY MACHINE
ENGIN DE TRAVAIL MOBILE, EN PARTICULIER ENGIN FORESTIER

(30) Priorität: 16.07.2020 DE 102020118838
(43) Veröffentlichungstag der Anmeldung: 24.05.2023
(73) Patentinhaber: Suffel Fördertechnik GmbH & Co. KG, 63741 Aschaffenburg (DE)
(72) Erfinder: WILLENBÜCHER, Michael, 64760 Oberzent (DE); HOFMANN, Claus, 63808 Haibach (DE); WELSCHOF, Bernward, 63762 Großostheim (DE)
(74) Vertreter: Patentship Patentanwaltgesellschaft
(86) Internationale Anmeldenummer: PCT/EP2021/068176
(87) Internationale Veröffentlichungsnummer: WO 2022/012949

(56) Entgegenhaltungen:
- DE-A1- 102018 104 810
- US-A- 2 156 183

## Beschreibung

Die Erfindung betrifft eine mobile Arbeitsmaschine, insbesondere Forstmaschine, die mit einem Fahrwerk, einer Antriebseinheit, einer Seilwinde, einer Runge und mit einem am Fahrzeugheck eines Fahrzeugkörpers angeordneten verstellbaren Rampenschild versehen ist, wobei die Arbeitsmaschine keinen Fahrerarbeitsplatz für einen Bediener aufweist und als ferngesteuerte Arbeitsmaschine ausgebildet ist.

Eine gattungsgemäße ferngesteuerte Arbeitsmaschine ist aus der DE 10 2018 104 810 A1 bekannt.

Aus der US 2 156 183 A ist eine Vorrichtung für den Holzeinschlag mit einem Rampenschild bekannt.

Derartige mobile als Forstmaschinen ausgebildete Arbeitsmaschinen werden als Fällhilfe für Bäume und als Rückehilfe zum Vorliefern von gefällten Bäumen an einen Waldweg benutzt. Da die Arbeitsmaschine keinen Fahrerarbeitsplatz für einen Bediener aufweist, kann eine gattungsgemäße Arbeitsmaschine kompakt und leicht gebaut werden und ermöglicht es, in Waldgebieten eingesetzt zu werden, die für herkömmliche Großmaschinen nicht geeignet sind.

Bei gattungsgemäßen mobilen Arbeitsmaschinen dient das Rampenschild ausschließlich dazu, mit der Seilwinde einen Baumstamm auf die Runge zu ziehen. Ein auf der Runge abgelegter Baumstamm führt durch das auf die Arbeitsmaschine wirkende Gewicht des Baustamms trotz geringem Eigengewicht der Arbeitsmaschine zu einer hohen Traktion.

Der vorliegenden Erfindung liegt die Aufgabe zugrunde, eine Arbeitsmaschine der eingangs genannten Gattung zur Verfügung zu stellen, die für universellere Einsätze verwendet werden kann.

Diese Aufgabe wird erfindungsgemäß dadurch gelöst, dass das Rampenschild mit mindestens einer Befestigungsschnittstelle versehen ist, an der eine Zusatzrunge lösbar befestigbar ist, und/oder das Rampenschild mit einer Befestigungsschnittstelle versehen ist, an der ein Anhängekupplungskopf lösbar befestigbar ist.

Mit derartigen Befestigungsschnittsellen ist es möglich, an dem Rampenschild temporär eine zweite von zwei Zusatzrungen gebildete Zusatzrungenzeile zu bilden, die es ermöglicht, zwischen der Runge und den Zusatzrungen Holzstangen, beispielsweise Zaunpfähle und/oder Zaunbaumaterial, beispielsweise Maschendrahtgeflecht, zu transportieren, das beispielsweise zum Einzäunen von Wiederaufforstungsflächen benötigt wird. Weiterhin ist es möglich, zwischen der Runge und der Zusatzrunge einen Wassertank zu transportieren, um Wiederaufforstungsflächen und neu angepflanzte Bäume zu gießen. Mit der temporär bildbaren Zusatzrunge kann somit das Rampenschild als Transportplattform genutzt werden. Mit einer derartigen Befestigungsschnittstellen ist es alternativ oder zusätzlich möglich, an dem Rampenschild temporär einen Anhängekupplungskopf zu befestigen, mit dem ein Anhänger gezogen werden kann. Mit den Befestigungsschnittstellen an dem Rampenschild und den daran befestigbaren Zusatzrungen bzw. Anhängekupplungskopf kann somit die Arbeitsmaschine zusätzlich zu der Funktion als Fällhilfe und als Rückehilfe für verschiedenste Transportaufgaben genutzt und somit für universellere Einsätze verwendet werden.

Gemäß einer vorteilhaften Ausführungsform der Erfindung ist die Befestigungsschnittstelle jeweils von einer in dem Rampenschild angeordneten Aufnahmehülse gebildet, in die die Zusatzrunge und/oder der Anhängekupplungskopf einsteckbar ist und die in dem Rampenschild versenkt angeordnet sind. In derartige Aufnahmehülsen kann eine Zusatzrunge bzw. ein Anhängekupplungskopf in schneller und einfacher Weise eingesteckt und wieder herausgezogen werden, so dass sich ein schneller Umbau der Arbeitsmaschine für Transportaufgaben ergibt. Mit einer versenkten Anordnung der Aufnahmehülsen in dem Rampenschlild wird erzielt, dass die Aufnahmehülsen nicht nach oben aus dem Rampenschild herausragen, so dass keine störenden Kanten durch die Aufnahmehülsen entstehen, die ein Aufziehen eines Baumstammes auf die Runge behindern könnten.

Vorteile ergeben sich, wenn gemäß einer Weiterbildung der Erfindung die Zusatzrunge und/oder der Anhängekupplungskopf mit einem Anschlagflansch versehen ist, mit dem im eingesteckten Zustand die Zusatzrunge und/oder der Anhängekupplungskopf an der Oberseite der Aufnahmehülse anliegt. Mit einem derartigen Anschlagflansch kann auf einfache Weise ein Anschlag gebildet werden, der das Einstecken der Zusatzrunge und/oder des Anhängekupplungskopfes in der entsprechenden Aufnahmehülse erleichtert.

Gemäß einer Weiterbildung der Erfindung ist die Zusatzrunge und/oder der Anhängekupplungskopf mit einem Sicherungselement, insbesondere eines Sicherungssplintes oder einer Sicherungsmutter, in der Aufnahmehülse sicherbar. Der Sicherungssplint kann beispielsweise als Federstecker oder Klappsplint ausgeführt sein. Mit einem als Sicherungssplint oder Sicherungsmutter ausgebildeten Sicherungselement kann die in der Aufnahmehülse eingesteckte Zusatzrunge und/oder der in der Aufnahmehülse eingesteckte Anhängekupplungskopf in schneller und einfacher Weise gegen Herausfallen aus der Aufnahmehülse gesichert werden.

Gemäß einer besonders vorteilhaften Ausführungsform der Erfindung sind zwei in Fahrzeugquerrichtung voneinander beabstandet angeordnete Befestigungsschnittstellen vorgesehen, an denen jeweils eine Zusatzrunge lösbar befestigbar ist. An dem Rampenschild kann somit in einfacher Weise eine aus zwei seitlich, in Fahrzeugquerrichtung beabstandet angeordneten Zusatzrungen gebildete Zusatzrungenzeile temporär gebildet werden.

Gemäß einer besonders vorteilhaften Ausführungsform der Erfindung ist eine in Fahrzeugquerrichtung im Wesentlichen mittig angeordnete Befestigungsschnittstelle vorgesehen, an der der Anhängekupplungskopf lösbar befestigbar ist. Diese Befestigungsschnittstelle ermöglicht es in einfacher Weise, temporär einen Anhängekupplungskopf in Fahrzeugquerrichtung mittig an dem Rampenschild anzuordnen.

Besondere Vorteile ergeben sich, wenn das Rampenschild gemäß einer vorteilhaften Weiterbildung der Erfindung mittels mindestens einer Abstützstrebe in einer im Wesentlichen horizontalen Stellung an dem Fahrzeugkörper der Arbeitsmaschine abstützbar ist. Mit einer derartigen Abstützstrebe kann das Rampenschild für Transportaufgaben in einer im Wesentlichen horizontalen Stellung in einfacher und schnellerer Weise arretiert und festgestellt werden.

Die Abstützstrebe kann als feste Strebe ausgebildet sein. Vorteile ergeben sich, wenn die Abstützstrebe als Gewindestrebe, insbesondere Doppelgewindestange, ausgebildet ist. Eine Gewindestrebe ermöglicht es in einfacher Weise, die Länge der Abstützstrebe anzupassen, um in einer gewählten Stellung des verstellbaren Rampenschildes das Rampenschid für Transortaufgaben abzustützen. Die Gewindestrebe ist bevorzugt als Doppelgewindestange, beispielsweise als sogenannter Oberlenker, ausgebildet, der aus 3-Punkt-Hydrauliksystemen von Traktoren bekannt ist.

Die Abstützstrebe ist gemäß einer vorteilhaften Ausführungsform der Erfindung mittels einer Bolzenverbindung an dem Fahrzeugkörper und mittels einer Bolzenverbindung an dem Rampenschild lösbar befestigbar. Dies ermöglich es in einfacher und schneller Weise, die Abstützstrebe im Bedarfsfall an dem Fahrzeugkörper und dem Rampenschild anzubauen.

Das verstellbare Rampenschild ist bevorzugt um eine horizontale Fahrzeugquerachse verstellbar am Fahrzeugheck der Arbeitsmaschine angeordnet.

Vorteile ergeben sich, wenn das verstellbares Rampenschild mittels mindestens eines Hydraulikzylinders um die Fahrzeugquerachse verstellbar ist. Dadurch kann das Rampenschild in einfacher Weise im Bedarfsfall um die horizontale Fahrzeugquerachse geneigt werden, um dieses für Transportaufgaben in eine im Wesentlichen horizontale Stellung zu verstellen bzw. für Rückeaufgaben nach unten auf den Boden abzusenken.

Bevorzugt ist der Hydraulikzylinder mittels eines eine Schwimmstellung aufweisenden Steuerventils betätigbar. In der Schwimmstellung kann das auf den Boden abgesenkte Rampenschild der Kontur des Bodens folgen und auf dem Boden gleiten, wodurch es ermöglicht wird, mit dem auf den Boden abgesenkten Rampenschild Waldwege abzuziehen.

Besondere Vorteile ergeben sich, wenn die Runge zwei in Fahrzeugquerrichtung beabstandet angeordnete vertikale Rungenstangen aufweist und um eine vertikale Achse drehbar gelagert ist. Zwischen zwei derartigen Rungenstangen kann in einfacher Weise ein Baumstamm abgelegt werden, wenn die Arbeitsmaschine als Rückehilfe genutzt wird.

Gemäß einer Weiterbildung der Erfindung ist in Fahrzeuglängsrichtung zwischen der Runge und dem Rampenschild an dem Fahrzeugkörper eine Querversteifung angeordnet. Die Querversteifung ermöglicht eine verwindungssteife und stabile Ausführung der Arbeitsmaschine am Fahrzeugheck, an dem das verstellbare Rampenschild gelagert ist und über das Baustämme mittels der Seilwinde auf die Runge gezogen werden oder auf dem für Transportaufgaben entsprechende Lasten transportiert werden.

Weitere Vorteile und Einzelheiten der Erfindung werden anhand des in den schematischen Figuren dargestellten Ausführungsbeispiels näher erläutert. Hierbei zeigt
- Figur 1: eine perspektivische Darstellung einer erfindungsgemäßen mobilen Arbeitsmaschine,
- Figur 2: die Arbeitsmaschine in einer perspektivischen Darstellung von unten,
- Figur 3: einen Schnitt entlang der Linie A-A der Figur 1,
- Figur 4: einen Ausschnitt der Figur 2 in einer vergrößerten Darstellung,
- Figur 5: einen Schnitt entlang der Linie B-B der Figur 1 in einer perspektivischen Darstellung und
- Figur 6: einen Schnitt entlang der Linie B-B der Figur 1 in einer Seitenansicht.

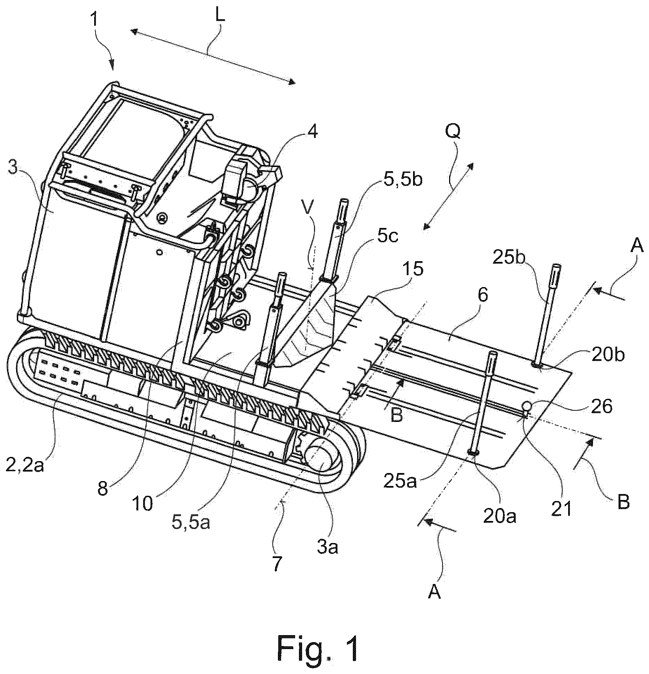

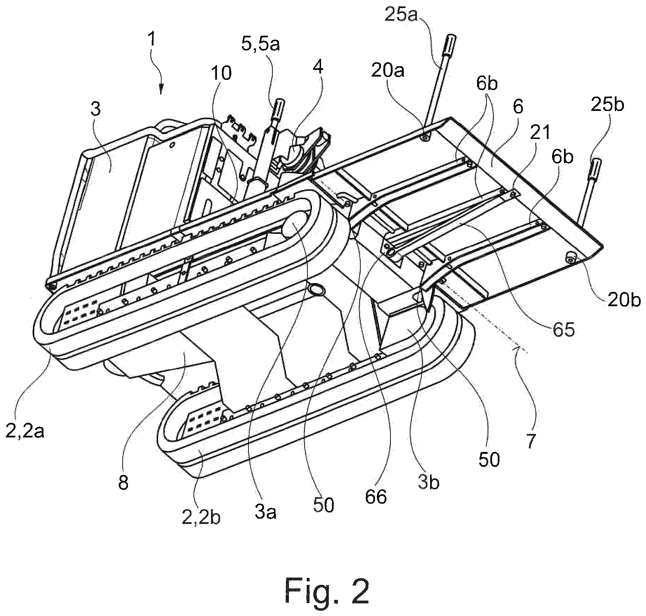

In den Figuren 1 und 2 ist eine erfindungsgemäße ferngesteuerte mobile Arbeitsmaschine 1, beispielsweise Forstmaschine, in einer perspektivischen Darstellung dargestellt.

Die mobile Arbeitsmaschine 1 umfasst ein Fahrwerk 2, das von zwei Raupenfahrwerken 2a, 2b gebildet ist, die jeweils beispielsweise von einem hydraulischen Fahrantriebsmotor 3a, 3b angetrieben sind. Die Fahrantriebsmotor 3a, 3b sind in Fahrzeuglängsrichtung L gesehen jeweils am hinteren Ende, d.h. am fahrzeugheckseitigen Ende, der Raupenfahrwerke 2a, 2b angeordnet.

Die mobile Arbeitsmaschine 1 weist eine Antriebseinheit 3, eine Seilwinde 4, eine Runge 5 und ein verstellbares Rampenschild 6 auf, das um eine horizontale Fahrzeugquerachse 7 verstellbar am Fahrzeugheck eines Fahrzeugkörpers 8 angeordnet ist. Die Arbeitsmaschine 1 weist keinen Fahrerarbeitsplatz für einen Bediener auf und ist mittels einer nicht näher dargestellten Fernbedienung von einem Bediener bedienbar. Die Antriebseinheit 3 kann einen Verbrennungsmotor aufweisen, der eine oder mehrere Hydraulikpumpen antreibt, die die Fahrantriebsmotoren 3a, 3b, einen die Seilwinde 4 antreibenden Hydraulikmotor und weitere hydraulische Verbraucher der Arbeitsmaschine, beispielsweise Hydraulkzylinder zum Verstellen des Rampenschildes 6, versorgen.

Bei der erfindungsgemäßen Arbeitsmaschine 1 sind in Fahrzeuglängsrichtung L gesehen vorne an der Fahrzeugfront die Antriebseinheit 3, benachbart zum Antriebsmotor 3 die Seilwinde 4, benachbart zur Seilwinde 4 die Runge 5 und am Fahrzeugheck das verstellbare Rampenschild 7 angeordnet. Die Seilwinde 4 in somit in Fahrzeuglängsrichtung gesehen zwischen der Runge 5 und dem Antriebsmotor 3 angeordnet.

Die Runge 5 ist in vertikaler Richtung oberhalb einer Bodenplatte 10 des Fahrzeugkörpers 8 angeordnet.

Die Antriebseinheit 3 und die Seilwinde 4 sind in einer vorderen Hälfte der Arbeitsmaschine 1 angeordnet. Die Bodenplatte 10 mit der darauf befindlichen Runge 5 bildet eine hintere Hälfte der Arbeitsmaschine 1.

Die Runge 5 ist bevorzugt um eine vertikale Achse V drehbar gelagert. Die drehbare Runge 5 kann vorteilhafterweise mittels einer Arretiervorrichtung in einer oder mehreren Stellungen arretierbar sein. Die Runge 5 weist im dargestellten Ausführungsbeispiel zwei in Fahrzeugquerrichtung Q beabstandet angeordnete vertikale Rungenstangen 5a, 5b auf, die an einem Querträger 5c befestigt sind, der um die vertikale Achse V drehbar auf der Bodenplatte 10 gelagert ist.

In Fahrzeuglängsrichtung L zwischen der Runge 5 und dem am Fahrzeugheck angeordneten Rampenschild 6 ist an der Oberseite der Bodenplatte 10 weiterhin eine Querversteifung 15 angeordnet.

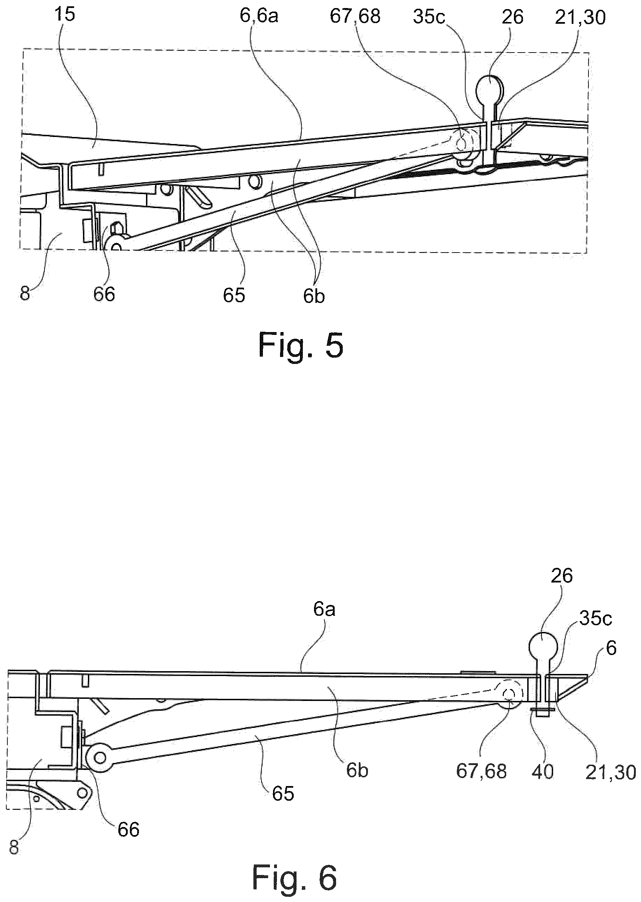

Erfindungsgemäß ist das Rampenschild 6 mit mindestens einer Befestigungsschnittstelle 20a, 20b, 21 versehen. An der Befestigungsschnittstelle 20a, 20b kann jeweils eine in den Figuren 1 bis 3 dargestellte Zusatzrunge 25a, 25b lösbar befestigt werden. An der Befestigungsschnittstelle 21 kann ein in den Figuren 1, 5 und 6 dargestellter Anhängekupplungskopf 26 lösbar befestigt werden.

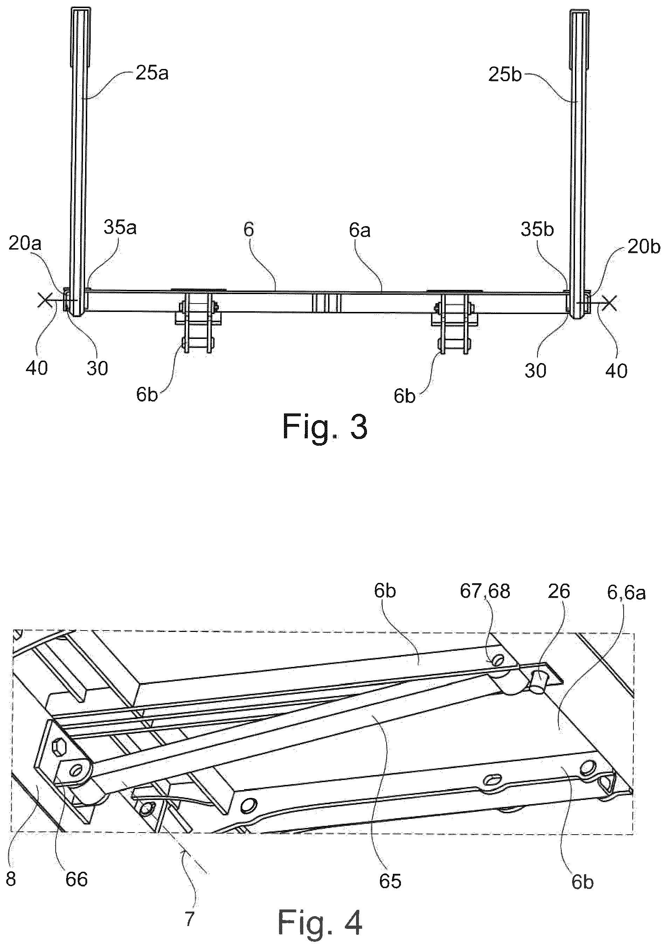

Die Befestigungsschnittstelle 20a, 20b, 21 ist jeweils - wie aus den Figuren 3, 5 und 6 ersichtlich ist - von einer in dem Rampenschild 6 angeordneten Aufnahmehülse 30 gebildet, in die die Zusatzrunge 25a, 25b bzw. der Anhängekupplungskopf 26 von oben einsteckbar ist. Das Rampenschild 6 besteht aus einem oberen Deckblech 6a und unter dem Deckblech 6a angeordneten Versteifungsträgern 6b. Die Aufnahmehülsen 30 sind in dem Deckblech 6a des Rampenschild 6 versenkt und somit unterhalb des Deckblechs 6a angeordnet.

Die Zusatzrunge 25a, 25b bzw. der Anhängekupplungskopf 26 sind jeweils mit einem Anschlagflansch 35a, 35b, 35c versehen, mit dem im eingesteckten Zustand die Zusatzrunge 25a, 25b bzw. der Anhängekupplungskopf 26 an der Oberseite der Aufnahmehülse 30 anliegt.

Um die Zusatzrunge 25a, 25b und den Anhängekupplungskopf 26 in der Aufnahmehülse 30 in dem eingesteckten Zustand zu sichern, sind die Zusatzrunge 25a, 25b und der Anhängekupplungskopf 26 jeweils mit einem Sicherungselement 40 in der Aufnahmehülse 30 sicherbar. Das Sicherungselement 40 ist bevorzugt als Sicherungssplint, beispielsweise Federstecker oder Klappsplint oder als aufgeschraubte Sicherungsmutter ausgebildet.

Im dargestellten Ausführungsbeispiel sind zwei in Fahrzeugquerrichtung Q voneinander beabstandet angeordnete Befestigungsschnittstellen 20a, 20b vorgesehen, an denen jeweils eine als Rungenstange ausgebildete Zusatzrunge 25a, 25b lösbar befestigbar ist. Die Befestigungsschnittstellen 20a, 20b für die Zusatzrungen 25a, 25b sind bevorzugt in der hinteren Hälfte des Rampenschildes 6 angeordnet und an den Außenseiten des Rampenschildes 6 angeordnet.

Für den Anhängekupplungskopf 26 ist eine in Fahrzeugquerrichtung Q im Wesentlichen mittig angeordnete Befestigungsschnittstelle 21 vorgesehen, an der der Anhängekupplungskopf 26 lösbar befestigbar ist. Die Befestigungsschnittstellen 21 für den Anhängekupplungskopf 26 ist am hinteren Ende des Rampenschildes 6 angeordnet.

Zur Verstellung des Rampenschildes 6 um die Fahrzeugquerachse 7 ist mindestens ein Hydraulikzylinder 50 vorgesehen. Im dargestellten Ausführungsbeispiel sind zwei Hydraulikzylinder 50 vorgesehen, die unterhalb der Bodenplatte 10 eingebaut sind und an den Versteifungsträgern 6b des Rampenschildes 6 beabstandet zur Achse 7 angreifen.

Wenn das Rampenschild 6 mit dem hinteren Ende auf den Boden abgesenkt ist, dient das Rampenschild 6 zur verbesserten Abstützung der Arbeitsmaschine 1, wenn mit der Seilwinde 4 ein Baumstamm zu der Arbeitsmaschine 1 herangezogen wird. Am hinteren Ende des Rampenschildes 6 können zur verbesserten Abstützung im Boden nicht näher dargestellte Bodenhaken angeordnet sein, die als Haken, Winkel, Bügel oder klammerartige Krampen ausgestaltet sein können.

Die Hydraulikzylinder 50 sind mittels eines Steuerventils betätigbar, das eine Hebenstellung zum Anheben des Rampenschildes 6, einen Senkenstellung zum Absenken des Rampenschildes 6 und eine Schwimmstellung aufweist, in der ein auf den Boden abgesenktes Rampenschild 6 der Bodenkontur folgen kann.

Das die Hydraulikzylinder 50 steuernde Steuerventil kann weiterhin eine Sperrstellung aufweisen, um eine Lasthaltung des Rampenschildes 6 in einer gewählten Position zu ermöglichen.

Bei der erfindungsgemäßen Arbeitsmaschine 1 ist bevorzugt ein Paralleletrieb der Fahrantriebsmotoren 2a, 2b und der das Rampenschild 6 betätigenden Hydraulikzylinder 50 ermöglicht, wodurch mit der Arbeitsmaschine 1 ein effektives Poltern vom Baumstämmen und Schieben von Baumstämmen sowie ein Positionieren des Rampenschildes 6 während der Fahrt der Arbeitsmaschine 1 ermöglicht wird.

Um für Transportaufgaben das Rampenschild 6 in einer im Wesentlichen horizontalen Stellung zu arretieren, in der das Rampenschild 6 in Verlängerung der Bodenplatte 10 angeordnet ist, ist mindestens eine Abstützstrebe 65 vorgesehen. Im dargestellten Ausführungsbeispiel ist eine Abstützstrebe 65 vorgesehen, die in Fahrzeugquerrichtung Q im Wesentlichen mittig angeordnet ist. Die Abstützstrebe 65 befindet sich in der horizontalen Stellung des Rampenschildes 6 unterhalb des Deckblechs 6a des Rampenschildes 6. Die Abstützstrebe 65 stützt somit das Rampenschild 6 unabhängig von den Hydraulikzylindern 50 ab, so dass die Hydraulikzylinder 50 von der an dem Rampenschild 6 angreifenden Kräften während Transportaufgaben entlastet sind und das Rampenschild unabhängig von Leckagen an den Hydraulikzylinder 50 in einer gewünschten Stellung gehalten wird.

Die Abstützstrebe 65 ist bevorzugt als Gewindestrebe, beispielsweise als Doppelgewindestange (Oberlenker), ausgebildet.

Die Abstützstrebe 65 ist mittels nicht näher dargestellten Bolzenverbindungen an einem an dem Fahrzeugheck des Fahrzeugkörper 8 angeordneten Lagerflansch 66 und an einem Lagerflansch 67 des Rampenschildes 6 lösbar befestigbar. Der Lagerflansch 67 ist bevorzugt von Lagerbohrungen 68 für einen Bolzen in einem in Fahrzeugquerrichtung Q mittig angeordneten Versteifungsträger 6b des Rampenschildes 6 gebildet.

Die in die Befestigungsschnittstellen 20a, 20b eingesteckten Zusatzrungen 25a, 25b bilden somit eine zusätzliche Rungenzeile an dem Rampenschild 6 zu der Runge 5 an der Bodenplatte 10. Der in der Befestigungsschnittstelle 21 eingesteckte Anhängekupplungskopf 26 bildet eine Anhängevorrichtung, mit der in Vorwärtsfahrtrichtung der Arbeitsmaschine 1 Anhänger gezogen werden können.

Die Arbeitsmaschine 1 weist bevorzugt eine Breite von maximal 1,5m auf, so dass die Arbeitsmaschine 1 auf einem Autoanhänger zu den Einsatzorten transportiert werden kann.

Das mittels der Abstützstrebe 65 in der horizontalen Stellung abgestützte Rampenschild 6 bildet somit eine Transportplattform von beispielswiese 2m² Grundfläche, die die Bodenplatte 10 verlängert und die es ermöglicht, verschiedenste Transportgüter, beispielsweise Zäune, Wassercontainer, Baumaterialien oder Agrargüter, zu transportieren und Anhänger zu ziehen.

Die Form des Rampenschildes 6, insbesondere die Form des Deckblechs 6a des Rampenschildes 6 kann je nach Hauptanwendung der Arbeitsmaschine 1 gewählt sein. Neben einer ebenen Form des Deckblechs 6a kann das Deckblech 6a in Fahrzeuglängsrichtung L nach unten hohlgebogen ausgeführt sein, um eine verbesserte Aufnahme eines Baumstammes und einen verbesserten Transport eines Baumstammes zu ermöglichen, oder alternativ in Fahrzeuglängsrichtung L nach oben hohlgebogen ausgeführt sein, um ein verbessertes Heranseilen eines Baumstammes aus einer leicht schrägen Richtung zu ermöglichen.

## Patentansprüche

1. Mobile Arbeitsmaschine (1), insbesondere Forstmaschine, die mit einem Fahrwerk (2), einer Antriebseinheit (3), einer Seilwinde (4), einer Runge (5) und mit einem am Fahrzeugheck eines Fahrzeugkörpers (8) angeordneten verstellbaren Rampenschild (6) versehen ist, wobei die Arbeitsmaschine (1) keinen Fahrerarbeitsplatz für einen Bediener aufweist und als ferngesteuerte Arbeitsmaschine (1) ausgebildet ist, **dadurch gekennzeichnet, dass** das Rampenschild (6) mit mindestens einer Befestigungsschnittstelle (20a, 20b) versehen ist, an der eine Zusatzrunge (25a; 25b) lösbar befestigbar ist, und/oder das Rampenschild (6) mit einer Befestigungsschnittstelle (21) versehen ist, an der ein Anhängekupplungskopf (26) lösbar befestigbar ist.

2. Mobile Arbeitsmaschine nach Anspruch 1, **dadurch gekennzeichnet, dass** die Befestigungsschnittstelle (20a; 20b; 21) jeweils von einer in dem Rampenschild (6) angeordneten Aufnahmehülse (30) gebildet ist, in die die Zusatzrunge (25a; 25b) und/oder der Anhängekupplungskopf (26) einsteckbar ist und die in dem Rampenschild (6) versenkt angeordnet sind.

3. Mobile Arbeitsmaschine nach Anspruch 2, **dadurch gekennzeichnet, dass** die Zusatzrunge (25a; 25b) und/oder der Anhängekupplungskopf (26) mit einem Anschlagflansch (35a; 35b; 35c) versehen ist, mit dem im eingesteckten Zustand die Zusatzrunge (25a; 25b) und/oder der Anhängekupplungskopf (26) an der Oberseite der Aufnahmehülse (30) anliegt.

4. Mobile Arbeitsmaschine nach Anspruch 2 oder 3, **dadurch gekennzeichnet, dass** die Zusatzrunge (25a; 25b) und/oder der Anhängekupplungskopf (26) mit einem Sicherungselement (40), insbesondere eines Sicherungssplintes oder einer Sicherungsmutter, in der Aufnahmehülse (30) sicherbar ist.

5. Mobile Arbeitsmaschine nach einem der Ansprüche 1 bis 4, **dadurch gekennzeichnet, dass** zwei in Fahrzeugquerrichtung (Q) voneinander beabstandet angeordnete Befestigungsschnittstellen (20a; 20b) vorgesehen sind, an denen jeweils eine Zusatzrunge (25a; 25b) lösbar befestigbar ist.

6. Mobile Arbeitsmaschine nach einem der Ansprüche 1 bis 5, **dadurch gekennzeichnet, dass** eine in Fahrzeugquerrichtung (Q) im Wesentlichen mittig angeordnete Befestigungsschnittstelle (21) vorgesehen ist, an der der Anhängekupplungskopf (26) lösbar befestigbar ist.

7. Mobile Arbeitsmaschine nach einem der Ansprüche 1 bis 6, **dadurch gekennzeichnet, dass** das Rampenschild (6) mittels mindestens einer Abstützstrebe (65) in einer im Wesentlichen horizontalen Stellung an dem Fahrzeugkörper (8) der Arbeitsmaschine (1) abstützbar ist.

8. Mobile Arbeitsmaschine nach Anspruch 7, **dadurch gekennzeichnet, dass** die Abstützstrebe (65) als Gewindestrebe, insbesondere Doppelgewindestange, ausgebildet ist.

9. Mobile Arbeitsmaschine nach Anspruch 7 oder 8, **dadurch gekennzeichnet, dass** die Abstützstrebe (65) mittels einer Bolzenverbindung an dem Fahrzeugkörper (8) und mittels einer Bolzenverbindung an dem Rampenschild (6) lösbar befestigbar ist.

10. Mobile Arbeitsmaschine nach einem der Ansprüche 1 bis 9, **dadurch gekennzeichnet, dass** das verstellbares Rampenschild (6) um eine horizontale Fahrzeugquerachse (7) verstellbar am Fahrzeugheck der Arbeitsmaschine (1) angeordnet ist.

11. Mobile Arbeitsmaschine nach einem der Ansprüche 1 bis 10, **dadurch gekennzeichnet, dass** das verstellbares Rampenschild (6) mittels mindestens eines Hydraulikzylinders (50) um die Fahrzeugquerachse (7) verstellbar ist.

12. Mobile Arbeitsmaschine nach Anspruch 11, **dadurch gekennzeichnet, dass** der Hydraulikzylinder (50) mittels eines eine Schwimmstellung aufweisenden Steuerventils betätigbar ist.

13. Mobile Arbeitsmaschine nach einem der Ansprüche 1 bis 12, **dadurch gekennzeichnet, dass** die Runge (5) zwei in Fahrzeugquerrichtung (Q) beabstandet angeordnete vertikale Rungenstangen (5a, 5b) aufweist und um eine vertikale Achse (V) drehbar gelagert ist.

14. Mobile Arbeitsmaschine nach einem der Ansprüche 1 bis 13, **dadurch gekennzeichnet, dass** in Fahrzeuglängsrichtung (L) zwischen der Runge (5) und dem Rampenschild (6) an dem Fahrzeugkörper (8) eine Querversteifung (15) angeordnet ist.

## Claims

1. Mobile working machine (1), in particular forestry machine, which is provided with a running-gear unit (2), a drive unit (3), a winch (4), a stanchion (5) and with an adjustable ramp plate (6) which is arranged at the rear of a vehicle body (1), wherein the working machine (1) does not have a driver's workstation for an operator and is designed as a remote-controlled working machine (8), **characterized in that** the ramp plate (6) is provided with at least one fastening interface (20a, 20b) to which an additional stanchion (25a; 25b) is releasably fastenable, and/or the ramp plate (6) is provided with a fastening interface (21) to which a trailer-hitch head (26) is releasably fastenable.

2. Mobile working machine according to Claim 1, **characterized in that** the fastening interface (20a; 20b; 21) is formed in each case by a receiving sleeve (30) arranged in the ramp plate (6), into which the additional stanchion (25a; 25b) and/or the trailer-hitch head (26) are/is pluggable and which is arranged in a recessed manner in the ramp plate (6).

3. Mobile working machine according to Claim 2, **characterized in that** the additional stanchion (25a; 25b) and/or the trailer-hitch head (26) are/is provided with a stop flange (35a; 35b; 35c), by way of which, in the plugged-in state, the additional stanchion (25a; 25b) and/or the trailer-hitch head (26) abut(s) against the top side of the receiving sleeve (30).

4. Mobile working machine according to Claim 2 or 3, **characterized in that** the additional stanchion (25a; 25b) and/or the trailer-hitch head (26) are/is able to be secured in the receiving sleeve (30) by way of a securing element (40), in particular a securing splint or a securing nut.

5. Mobile working machine according to one of Claims 1 to 4, **characterized in that** provision is made of two fastening interfaces (20a; 20b) which are arranged so as to be spaced apart from one another in the vehicle transverse direction (Q) and to which in each case one additional stanchion (25a; 25b) is releasably fastenable.

6. Mobile working machine according to one of Claims 1 to 5, **characterized in that** provision is made of a fastening interface (21) which is arranged substantially centrally in the vehicle transverse direction (Q) and to which the trailer-hitch head (26) is releasably fastenable.

7. Mobile working machine according to one of Claims 1 to 6, **characterized in that** the ramp plate (6) is supportable in a substantially horizontal position against the vehicle body (8) of the working machine (1) by means of at least one supporting strut (65).

8. Mobile working machine according to Claim 7, **characterized in that** the supporting strut (65) is in the form of a threaded strut, in particular a double-threaded rod.

9. Mobile working machine according to Claim 7 or 8, **characterized in that** the supporting strut (65) is releasably fastenable to the vehicle body (8) by means of a bolt connection and to the ramp plate (6) by means of a bolt connection.

10. Mobile working machine according to one of Claims 1 to 9, **characterized in that** the adjustable ramp plate (6) is arranged at the rear of the working machine (1) so as to be adjustable about a horizontal vehicle transverse axis (7).

11. Mobile working machine according to one of Claims 1 to 10, **characterized in that** the adjustable ramp plate (6) is adjustable about the vehicle transverse axis (7) by means of at least one hydraulic cylinder (50).

12. Mobile working machine according to Claim 11, **characterized in that** the hydraulic cylinder (50) is actuatable by means of a control valve that has a floating position.

13. Mobile working machine according to one of Claims 1 to 12, **characterized in that** the stanchion (5) has two vertical stanchion rods (5a, 5b) arranged so as to be spaced apart in the vehicle transverse direction (Q) and is mounted so as to be rotatable about a vertical axis (V).

14. Mobile working machine according to one of Claims 1 to 13, **characterized in that** a transverse reinforcement (15) is arranged on the vehicle body (8) between the stanchion (5) and the ramp plate (6) in the vehicle longitudinal direction (L).

## Revendications

1. Engin de travail mobile (1), en particulier engin forestier, qui est équipé d'un train de roulement (2), d'une unité d'entraînement (3), d'un treuil (4), d'un rancher (5) et d'un panneau réglable (6) formant rampe agencé à l'arrière d'un corps (8) de véhicule, l'engin de travail (1) ne comprenant pas de poste de conduite pour un opérateur et étant conçu sous la forme d'un engin de travail télécommandé (1), **caractérisé en ce que** le panneau (6) formant rampe est muni d'au moins une interface de fixation (20a, 20b) sur laquelle un rancher supplémentaire (25a ; 25b) est apte à être fixé de manière amovible, et/ou le panneau (6) formant rampe est muni d'une interface de fixation (21) sur laquelle une tête (26) d'attelage de remorque est apte à être fixée de manière amovible.

2. Engin de travail mobile selon la revendication 1, **caractérisé en ce que** l'interface de fixation (20a ; 20b ; 21) est formée par un manchon de réception (30) agencé dans le bouclier de rampe (6), dans lequel le rancher supplémentaire (25a ; 25b) et/ou la tête (26 d'attelage de remorque) sont aptes à être insérés et qui sont agencés de manière encastrée dans le panneau (6) formant rampe.

3. Engin de travail mobile selon la revendication 2, **caractérisé en ce que** le rancher supplémentaire (25a ; 25b) et/ou la tête (26) d'attelage de remorque sont munis d'une bride de butée (35a ; 35b ; 35c) qui, une fois dans l'état d'insertion, permet au rancher supplémentaire (25a ; 25b) et/ou à la tête (26) d'attelage de remorque de s'appuyer sur la face supérieure du manchon de réception (30) .

4. Engin de travail mobile selon la revendication 2 ou la revendication 3, **caractérisé en ce que** le rancher supplémentaire (25a ; 25b) et/ou la tête (26) d'attelage de remorque sont aptes à être bloqués dans le manchon de réception (30) au moyen d'un élément de fixation (40), en particulier d'une goupille fendue ou d'un écrou de blocage.

5. Engin de travail mobile selon l'une des revendications 1 à 4, **caractérisé en ce qu'**il est prévu deux interfaces de fixation (20a ; 20b) agencées à distance l'une de l'autre dans la direction transversale (Q) du véhicule, sur lesquelles un rancher supplémentaire (25a ; 25b) respectif est apte à être fixé de manière amovible.

6. Engin de travail mobile selon l'une des revendications 1 à 5, **caractérisée en ce qu'**il est prévu une interface de fixation (21) agencée sensiblement au milieu dans la direction transversale (Q) du véhicule, sur laquelle la tête (26) d'attelage de remorque est apte à être fixée de manière amovible.

7. Engin de travail mobile selon l'une des revendications 1 à 6, **caractérisé en ce que** le panneau (6) formant rampe est apte à être supporté au moyen d'au moins une jambe de force (65) dans une position sensiblement horizontale sur le corps (8) de véhicule de l'engin de travail (1).

8. Engin de travail mobile selon la revendication 7, **caractérisée en ce que** la jambe de force (65) est conçue sous forme d'une jambe de force filetée, en particulier d'une tige filetée double.

9. Engin de travail mobile selon la revendication 7 ou la revendication 8, **caractérisé en ce que** la jambe de force (65) est apte à être fixée de manière amovible au corps du véhicule (8) au moyen d'un assemblage par boulons et au panneau (6) formant rampe au moyen d'un assemblage par boulons.

10. Engin de travail mobile selon l'une des revendications 1 à 9, **caractérisé en ce que** le panneau réglable (6) formant rampe est agencé de manière réglable autour d'un axe transversal horizontal (7) du véhicule à l'arrière de l'engin de travail (1).

11. Engin de travail mobile selon l'une des revendications 1 à 10, **caractérisé en ce que** le panneau réglable (6) formant rampe est apte à être déplacé autour de l'axe transversal (7) de véhicule au moyen d'au moins un vérin hydraulique (50).

12. Engin de travail mobile selon la revendication 11, **caractérisé en ce que** le vérin hydraulique (50) est apte à être actionné au moyen d'une vanne de commande comprenant une position flottante.

13. Engin de travail mobile selon l'une des revendications 1 à 12, **caractérisé en ce que** le rancher (5) comprend deux barres de rancher verticales (5a, 5b) espacées dans la direction transversale (Q) de véhicule et est monté de manière à être apte à tourner autour d'un axe vertical (V).

14. Engin de travail mobile selon l'une des revendications 1 à 13, **caractérisé en ce qu'**un renfort transversal (15) est agencé sur le corps (8) de véhicule dans la direction longitudinale (L) du véhicule entre le rancher (5) et le panneau (6) formant rampe.
